# EUROPÄISCHE PATENTANMELDUNG

(11) **EP 2 752 592 A1**
(43) Veröffentlichungstag der Anmeldung: **09.07.2014**
(21) Anmeldenummer: 14162776.0
(22) Anmeldetag: 19.05.2011
(51) Int. Cl.: F16D 3/226

(54) **Verfahren zur Herstellung eines Außenteilrohlings und eines Innenteilrohlings einer Gelenkwelle sowie Gelenkwelle**

(30) Priorität: 21.05.2010 DE 102010021739; 08.06.2010 DE 102010023029
(62) Teilanmeldung aus: 11721001.3
(71) Anmelder: MAPAL Fabrik für Präzisionswerkzeuge Dr. Kress KG, 73431 Aalen (DE)
(72) Erfinder: Kress, Dieter, 73431 Aalen (DE)
(74) Vertreter: Gleiss, Alf-Olav

(57) **Zusammenfassung**

Es wird ein Verfahren zur Herstellung eines Außenteilrohlings (11) und eines Innenteilrohlings (9) eines Gelenks (1) einer Gelenkwelle (G) aus einem ringförmigen Ausgangskörper (35), der eine Vorderseite (37) und eine Rückseite (39) aufweist, mit folgenden Schritten:
- Einbringen mindestens einer Durchgangsbohrung (41) in die Vorder- (37) oder Rückseite (39) des Ausgangskörpers (35) zur Vorbereitung einer Kugelbahnoberfläche,
- wobei die mindestens eine Durchgangsbohrung (41) senkrecht oder unter einem Winkel zur Vorder- (37) oder Rückseite (39) des Ausgangskörpers (35) verläuft, vorzugsweise ohne eine Mittelachse (59) des Ausgangskörpers (35) zu schneiden,
- Einbringen einer -vorzugsweise kreisförmigen- Nut (51) in die Vorderseite (37) des Ausgangskörpers (35), welche die mindestens eine Durchgangsbohrung (41) zur Vorbereitung der Kugelbahnoberfläche schneidet, und dass vorzugsweise in die Rückseite (39) des Ausgangskörpers (35) eine Nut (51') eingebracht wird, welche die mindestens eine Durchgangsbohrung (41') zur Vorbereitung der Kugelbahnoberfläche schneidet, um den Innenteilrohling (9) von dem Außenteilrohling (11) abzugrenzen, und
- vorzugsweise Einbringen mindestens einer Bohrung (31) in den Ausgangskörper (35) für Befestigungsmittel (13).

## Beschreibung

Die Erfindung betrifft ein Verfahren zur Herstellung eines Außenteilrohlings und eines Innenteilrohlings eines Gelenks einer Gelenkwelle aus einem ring- oder scheibenförmigen Ausgangskörper oder aus einem stangenförmigen Ausgangsmaterial. Außerdem betrifft die Erfindung ein Gelenk mit einem Innenteil und einem Außenteil gemäß Anspruch 14.

Gelenke von Gelenkwellen und Verfahren zu ihrer Herstellung sind bekannt. Sie dienen der Übertragung eines Drehmoments von einem Wellenende auf ein anderes Wellenende, wobei die über ein Gelenk verbundenen Wellen ihre Winkellage zueinander ändern können. Derartige Gelenke werden auch homokinetisches Gelenk, Gleichlaufgelenk oder Rzeppa-Gelenk genannt. Ein weit verbreiteter Einsatzfall derartiger Gelenkwellen ist der Antriebsstrang von Kraftfahrzeugen, wo sich Räder gegenüber der zugeordneten Antriebswelle zum Ausgleich von Unebenheiten auf der Fahrbahn und auch bei Lenkbewegungen bewegen müssen, während gleichzeitig ein Antriebsmoment auf die Räder übertragen wird. Grundsätzlich weisen Gelenkwellen der hier angesprochenen Art mindestens ein Gelenk mit einem Außenteil und einem Innenteil auf, die an ihrer Innen- beziehungsweise Außenfläche mit Kugelbahnen versehen sind, in denen von einem Kugelkäfig gehaltene Kugeln angeordnet sind. Das Außen- und Innenteil können sich relativ zueinander bezüglich ihrer Winkellage bewegen. Ein Drehmoment wird über die in den Kugelbahnen des Außen- beziehungsweise Innenteils angeordneten Kugeln übertragen. Bei Verfahren zur Herstellung derartiger Gelenke werden die Außen- und Innenteile zunächst als Schmiedeteil vorgefertigt und dann spanend vorbearbeitet. Anschließend werden die Teile wärmebehandelt und dann die Kugelbahnen und andere Funktionsflächen hartbearbeitet. Nachteil dieses Verfahrens ist es, dass für die Vorbearbeitung der Außen- und Innenteile jeweils entsprechende Bearbeitungseinrichtungen bereitgestellt werden müssen, da die beiden Teile getrennt voneinander bearbeitet werden. So können entweder zwei Fertigungseinrichtungen, beispielsweise Transferstraßen, genutzt werden, was hohe Investitionen und einen großen Platzbedarf bedeutet, oder beide Teile werden auf derselben Einrichtung nacheinander hergestellt, was aber eine geringe Kapazität beziehungsweise Ausbringung bedeutet und in der Massenfertigung nicht akzeptiert werden kann.

Aufgabe der Erfindung ist es daher, ein Verfahren bereitzustellen, mit dem ein Außenteilrohling und ein Innenteilrohling des Gelenks einer Gelenkwelle auf nur einer Fertigungseinrichtung hergestellt werden können, wobei hohe Stückzahlen gewährleistet sind.

Zur Lösung dieser Aufgabe wird ein Verfahren vorgeschlagen, das die in Anspruch 1 genannten Merkmale aufweist. Bei diesem Verfahren werden die Rohlinge des Außen- und Innenteils des Gelenks einer Gelenkwelle aus einem ringförmigen Ausgangskörper hergestellt, der eine Rückseite und eine Vorderseite aufweist. Das Verfahren umfasst die folgenden Schritte: Es wird vorzugsweise mindestens eine Bohrung für Befestigungsmittel in den Ausgangskörper eingebracht, wobei dieser Schritt entfallen oder zu einem späteren Zeitpunkt durchgeführt werden kann; in diesen wird mindestens eine Durchgangsbohrung in dessen Vorder- oder Rückseite zur Vorbereitung der Kugelbahnoberflächen eingebracht, die senkrecht oder unter einem Winkel zur Vorder- oder Rückseite des Ausgangskörpers verläuft. In den Ausgangskörper wird eine vorzugsweise ringförmige Nut eingebracht, welche die mindestens eine Bohrung zur Vorbereitung der Kugelbahnoberfläche schneidet. Durch diese Nut wird ein Außenteil des Gelenks von einem Innenteil abgegrenzt. Dabei ist es möglich, dass von den gegenüberliegenden Seiten, also von der Vorder- und der Rückseite des Ausgangskörpers Nuten in diesen eingebracht werden, die so tief sind, dass sie den Ausgangskörper vollständig durchdringen und damit den Rohling des Außen- und Innenteils schaffen. Möglich ist es aber auch, zunächst einen Steg zwischen den von der Vorder- und Rückseite eingebrachten Nuten stehenzulassen.

Es zeigt sich, dass die Reihenfolge der in den Ausgangskörper eingebrachten Bohrungen frei wählbar ist. Entscheidend ist, dass die Rohlinge des Außen- und Innenteils der Gelenkwelle bei der Einbringung der Bohrungen, insbesondere der Bohrungen, welche der Vorbereitung einer Kugelbahn oder -fläche dienen, noch miteinander verbunden sind, sodass weitere Schritte an ein und derselben Fertigungsmaschine, vorzugsweise auch während einer einzigen Einspannung des Ausgangskörpers durchgeführt werden können. Dies reduziert die Bearbeitungszeit des Ausgangskörpers wesentlich.

Zur Lösung dieser Aufgabe wird überdies ein Verfahren zur Herstellung eines Rohlings eines Außenteils und eines Innenteils eines Gelenks einer Gelenkwelle aus einem scheibenförmigen Ausgangskörper vorgeschlagen, das die in Anspruch 2 genannten Merkmale umfasst. Bei diesem Verfahren werden sämtliche Arbeitsschritte realisiert, die anhand von Anspruch 1 erläutert wurden. Zusätzlich wird in den Ausgangskörper eine zentrale Bohrung für den Eingriff einer Welle eingebracht. Es ergeben sich damit hier dieselben Vorteile, wie sie anhand des Verfahrens nach Anspruch 1 erläutert wurden. Zur Lösung dieser Aufgabe wird auch ein Verfahren mit den Merkmalen des Anspruchs 3 vorgeschlagen, das der Herstellung eines Außenteilrohlings und eines Innenteilrohlings eines Gelenks einer Gelenkwelle aus einem ringförmigen Ausgangskörper dient. Dieser weist eine Rückseite und eine Vorderseite auf. Bei der Durchführung dieses Verfahrens wird in die Vorder- und in die Rückseite des Ausgangskörpers mindestens je eine Bohrung zur Vorbereitung einer Kugelbahnoberfläche eingebracht, wobei die Mittelachsen dieser Bohrungen unter einem Winkel von α ≥ 0° zueinander verlaufen und sich schneiden. Der Winkel ist vorzugsweise > 0° sodass zueinander abgeknickte Bohrungen entstehen, welche Bereiche der Kugelbahnoberflächen bilden. Die Mittelachsen dieser Bohrungen schneiden vorzugsweise eine Mittelachse des Ausgangskörpers.

Außerdem wird zur Lösung dieser Aufgabe ein Verfahren mit den Merkmalen des Anspruchs 4 vorgeschlagen, mit dem Rohlinge eines Außen- und Innenteils eines Gelenks einer Gelenkwelle aus einem im Wesentlichen scheibenförmigen Ausgangskörper hergestellt werden. Bei diesem Verfahren wird vorzugsweise mindestens eine Bohrung in den Ausgangskörper eingebracht, die der Aufnahme eines Befestigungsmittels dient; dieser Schritt kann auch entfallen oder zu einem späteren Zeitpunkt durchgeführt werden. Außerdem wird eine zentrale Bohrung in den Ausgangskörper eingebracht, in die ein Wellenende zur Übertragung eines Drehmoments einführbar ist. Zur Vorbereitung der Kugelbahnoberfläche wird in die Vorder- und Rückseite des Ausgangskörpers mindestens je eine Bohrung eingebracht, deren Mittelachsen sich unter einem Winkel von α ≥ 0° schneiden, vorzugsweise im Bereich einer Mittelebene des Ausgangskörpers. Außerdem wird eine Nut in die Vorder- und in die Rückseite des Ausgangskörpers eingebracht, welche die mindestens eine Bohrung zur Vorbereitung der Kugelbahnoberfläche schneidet. Dadurch wird der Rohling für das Innen- und für das Außenteil der Gelenkwelle realisiert, indem der Ausgangskörper in zwei konzentrisch angeordnete Teile getrennt wird.

Schließlich wird zur Lösung dieser Aufgabe ein Verfahren mit den Merkmalen des Anspruchs 5 vorgeschlagen, bei dem ein Außenteilrohling sowie ein Innenteilrohling eines Gelenks einer Gelenkwelle aus stangenförmigem Ausgangsmaterial hergestellt werden. Dabei wird in eine Stirnseite des Ausgangsmaterials mindestens eine Bohrung eingebracht, die der Vorbereitung einer Kugelbahnoberfläche dient. Die Ausnehmung kann geradlinig oder gekrümmt verlaufen und mit der Stirnseite einen Winkel ≥ 0° einschließen. Nach Einbringen der Ausnehmung wird eine Scheibe von dem stangenförmigen Material zur Erzeugung eines Ausgangskörpers abgetrennt, welcher dann dazu dient, einen Außenteilrohling und einen Innenteilrohling herzustellen. Vor oder nach Abtrennung der Scheibe wird eine Nut in die Stirnseite des Ausgangsmaterials eingebracht, welche die mindestens eine Ausnehmung schneidet, um letztlich einen Außenteilrohling von einem Innenteilrohling zu trennen. Wir die Nut vor Abtrennen der Scheibe vom Ausgangsmaterial eingebracht, und ist diese tiefer als die Dicke der Scheibe, muss der mittlere Bereich des Ausgangsmaterials vor Abtrennen der Scheibe gehalten werden, damit der Außenteilrohling und der Innenteilrohling für eine definierte Weiterbearbeitung zur Verfügung stehen. Weitere Ausführungsformen der Verfahren ergeben sich aus den zugehörigen Unteransprüchen.

Zur Lösung dieser Aufgabe wird auch ein Gelenk gemäß Anspruch 14 vorgeschlagen, das ein Innenteil und ein Außenteil aufweist, wobei diese Teile aus Rohlingen bestehen, die nach einem der oben genannten Verfahren herstellbar sind.

Die Erfindung wird im Folgenden anhand der Zeichnung näher erläutert. Es zeigen:
- Figur 1: eine Prinzipskizze einer Gelenkwelle;
- Figur 2: eine perspektivische Explosionsdarstellung eines Teils der Gelenkwelle gemäß Figur 1;
- Figur 3: einen Querschnitt durch ein Teil der Gelenkwelle nach Figur 1;
- Figur 4a: einen Ausgangskörper zur Herstellung eines Gelenks einer Gelenkwelle in einem ersten Fertigungszustand;
- Figur 4b: den Ausgangskörper gemäß Figur 4a in einem zweiten Fertigungszustand;
- Figur 4c: den Ausgangskörper gemäß Figur 4a in einem dritten Fertigungszustand;
- Figur 4d: den Ausgangskörper gemäß Figur 4a in einem vierten Fertigungszustand, in dem ein getrenntes Innen- und Außenteil vorliegt;
- Figur 5: einen Querschnitt durch ein erstes Ausführungsbeispiel eines Ausgangskörpers und
- Figur 6: einen Querschnitt durch ein zweites Ausführungsbeispiel des Ausgangskörpers.

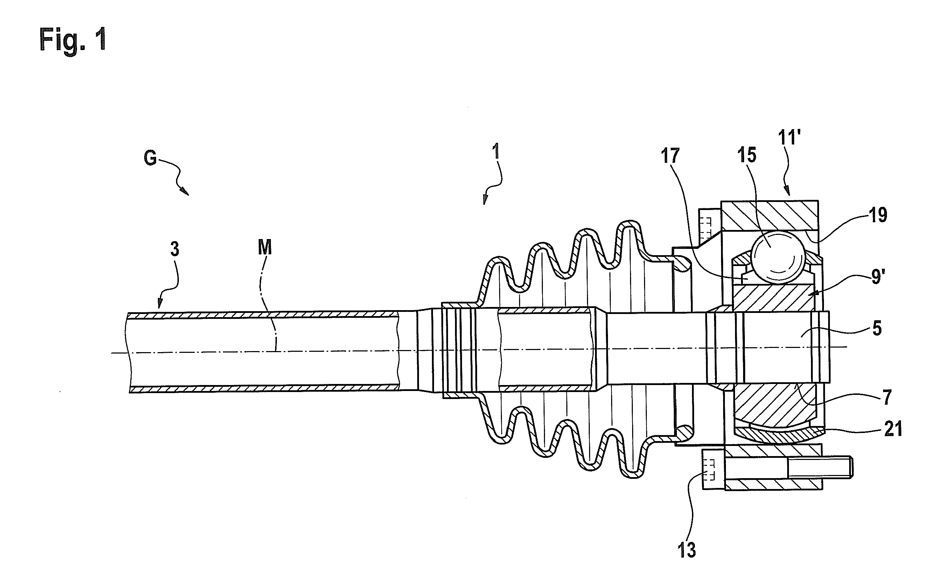

Die in Figur 1 dargestellte Gelenkwelle G mit einem Gelenk 1 ist abgebrochen dargestellt und kann beispielsweise Teil eines Antriebsstrangs eines Kraftfahrzeugs sein. Sie weist eine erste Welle 3 auf, die mit ihrem Wellenende 5 in eine zentrale Bohrung 7 eines Innenteils 9' eingreift. Das -vorzugsweise runde- Innenteil 9' wird von einem vorzugsweise ringförmigen Außenteil 11' umgeben, an dem über geeignete Befestigungsmittel 13, die hier als Schrauben ausgebildet sind, eine zweite, hier nicht dargestellte, Welle befestigt werden kann. Es sind auch andere Befestigungsmöglichkeiten denkbar. Ein in die erste Welle 3 eingeleitetes Drehmoment wird über deren Wellenende 5 in das Innenteil 9' des Gelenks 1 übertragen und weiter über mindestens eine Kugel 15 auf das Außenteil 11', und damit auf die hier nicht dargestellte, am Außenteil 11' befestigte zweite Welle. Die Kugel 15 greift einerseits in einen Kugelbahnabschnitt 17 im Bereich der Außenfläche des Innenteils 9' und andererseits in einen Kugelbahnabschnitt 19 auf der Innenfläche des Außenteils 11' ein, sodass sie der Drehmomentübertragung vom Innenteil 9' auf das Außenteil 11' dient.

Selbstverständlich ist es möglich, dass ein Drehmoment über die zweite Welle - beispielsweise über die Befestigungsmittel 13 - in das Außenteil 11' eingeleitet wird, von dort über die mindestens eine Kugel 15 auf das Innenteil 9' und damit auf die erste Welle 3.

Die mindestens eine Kugel 15 wird von einem Kugelkäfig 21 frei drehbar in den Kugelbahnabschnitten 17 und 19 gehalten.

Die Grundfunktion des Gelenks 1 einer Gelenkwelle G ist bekannt, sodass hier nicht näher darauf eingegangen wird.

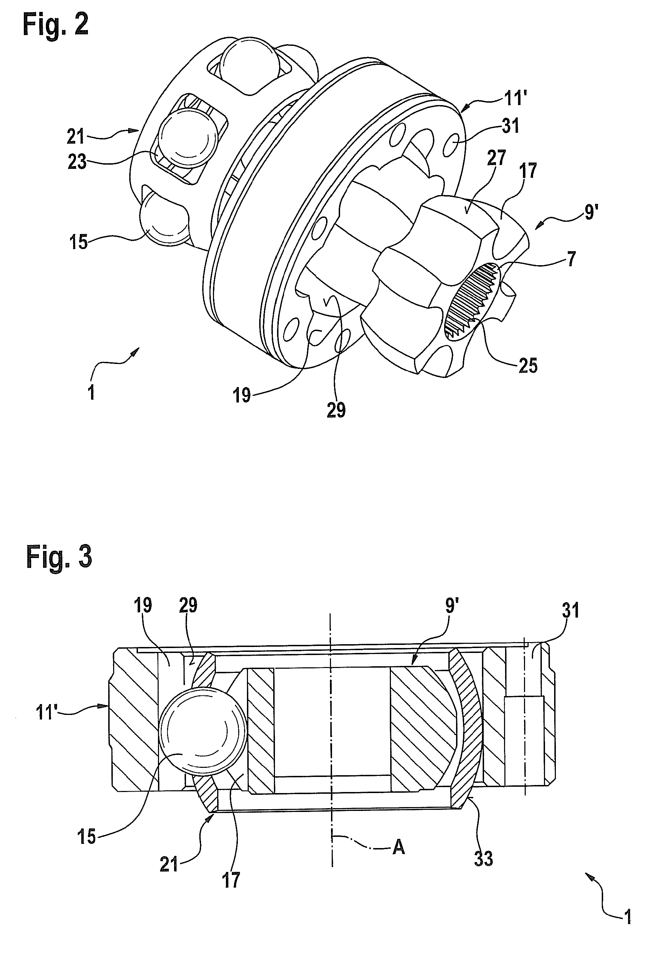

Figur 2 zeigt in perspektivischer Explosionsdarstellung einen Teil des Gelenks 1, nämlich das Innenteil 9', das Außenteil 11', und die mindestens eine Kugel 15, die drehbar in einem Kugelkäfig 21 gelagert ist. Dazu weist dieser mindestens eine Ausnehmung 23 auf, in der die mindestens eine Kugel 15 frei drehbar angeordnet ist. Bei dem hier dargestellten Ausführungsbeispiel des Gelenks 1 sind sechs Kugeln 15 vorgesehen. Der Kugelkäfig 21 weist daher ebenfalls sechs vorzugsweise in gleichem Abstand zueinander angeordnete Ausnehmungen 23 auf.

Aus Figur 2 ergibt sich, dass die Innenfläche der Bohrung 7 im Innenteil 9' eine Verzahnung 25 aufweist, die parallel zur Mittelachse der Bohrung 7 verlaufende Nuten und Rippen umfasst. Das Wellenende 5, das in Figur 2 nicht dargestellt, aber in Figur 1 wiedergegeben ist, ist komplementär ebenfalls mit einer Verzahnung ausgebildet, sodass zwischen dem Wellenende 5 der ersten Welle 3 und dem Innenteil 9' eine sichere drehfeste Kopplung gegeben ist, die insbesondere dann bevorzugt wird, wenn hohe Drehmomente übertragen werden sollen.

Das Innenteil 9' weist eine Außenfläche 27 auf, die mit mindestens einem Kugelbahnabschnitt 17 versehen ist. Vorzugsweise ist die Anzahl der Kugelbahnabschnitte 17 in der Außenfläche 27 des Innenteils 9 auf die Anzahl der Kugeln 15 abgestimmt. Hier sind daher in der Außenfläche 27 sechs Kugelbahnabschnitte 17 vorgesehen, in welche sechs Kugeln eingreifen können.

Entsprechend ist die Innenfläche des Außenteils 11' mit mindestens einem Kugelbahnabschnitt 19 versehen, in den die mindestens eine Kugel 15 eingreift. Da die Anzahl auch dieser Kugelabschnitte 19 auf die Anzahl der Kugeln 15 abgestimmt ist, ist die Innenfläche 29 mit sechs Kugelbahnabschnitten 19 versehen, in die jeweils eine der sechs Kugeln 15 eingreift, um ein Drehmoment zwischen Innenteil 9' und Außenteil 11' übertragen zu können.

Das Außenteil 11' ist hier mit mindestens einer Bohrung 31 versehen, die der Aufnahme eines Befestigungsmittels 13 dient, das in Figur 1 dargestellt ist, welches eine Verbindung des Außenteils 11' mit einer zweiten, hier nicht dargestellten, Welle ermöglicht. Bei dem hier dargestellten Ausführungsbeispiel des Außenteils 11' sind sechs auf einer gedachten Kreisbahn in gleichem Abstand zueinander angeordnete Bohrungen 31 vorgesehen, die der Aufnahme von sechs Befestigungsmitteln 13 dienen. Diese Bohrungen 31 können entfallen, wenn das Außenteil 11' auf andere Weise mit einer zweiten Welle gekoppelt wird.

Um die mindestens eine Kugel in den Kugelbahnabschnitten 17 und 19 des Innenteils 9' beziehungsweise des Außenteils 11' zu sichern, ist der Kugelkäfig 21 vorgesehen. Durch ihn wird die mindestens eine Kugel 15 im Bereich der Kugelbahnabschnitte 17 und 19 gehalten, wenn über das Gelenk ein Drehmoment übertragen werden soll und dabei die in Figur 1 dargestellte erste Welle 3 mit einer von dem mindestens einen Befestigungsmittel 13 gehaltenen zweiten Welle einen Winkel ≥ 0° einschließt, wenn also die Mittelachse M der elsten Welle 3 mit der Mittelachse der hier nicht dargestellten zweiten Welle einen Winkel einschließt, die beiden Wellen also nicht fluchtend zueinander angeordnet sind.

Figur 3 zeigt einen Teil des Gelenks 1, nämlich das Außenteil 9' und das Innenteil 11' sowie den Kugelkäfig 21 mit mindestens einer Kugel 15 in zusammengebautem Zustand. Gleiche Teile sind mit gleichen Bezugsziffern versehen. Insofern wird auf die Beschreibung der Figuren 1 und 2 verwiesen. Deutlich erkennbar ist der auf der Innenfläche 29 des Außenteils 11' vorgesehene Kugelbahnabschnitt 19, außerdem der mindestens eine auf der Außenfläche des Innenteils 9' vorgesehene Kugelbahnabschnitt 17 sowie die in die beiden Kugelbahnabschnitte 17 und 19 eingreifende Kugel 15.

Die in Figur 3 gewählte Schnittebene folgt nicht einer Durchmesserlinie des Innen- beziehungsweise Außenteils. Sie ist vielmehr im Bereich der Mittelachse A von Innen- und Außenteil abgeknickt, sodass sie links von der Mittelachse A die Kugel 15 und rechts von der Mittelachse A die Bohrung 31 für ein Befestigungsmittel schneidet.

Die Außenfläche 33 des Kugelkäfigs 21 ist vorzugsweise, wie bekannt, konvex gekrümmt und ist vorzugsweise kreisbogenförmig gewölbt. Die Ausgestaltung eines Kugelkäfigs 21 ist grundsätzlich bekannt, sodass hier nicht näher darauf eingegangen wird.

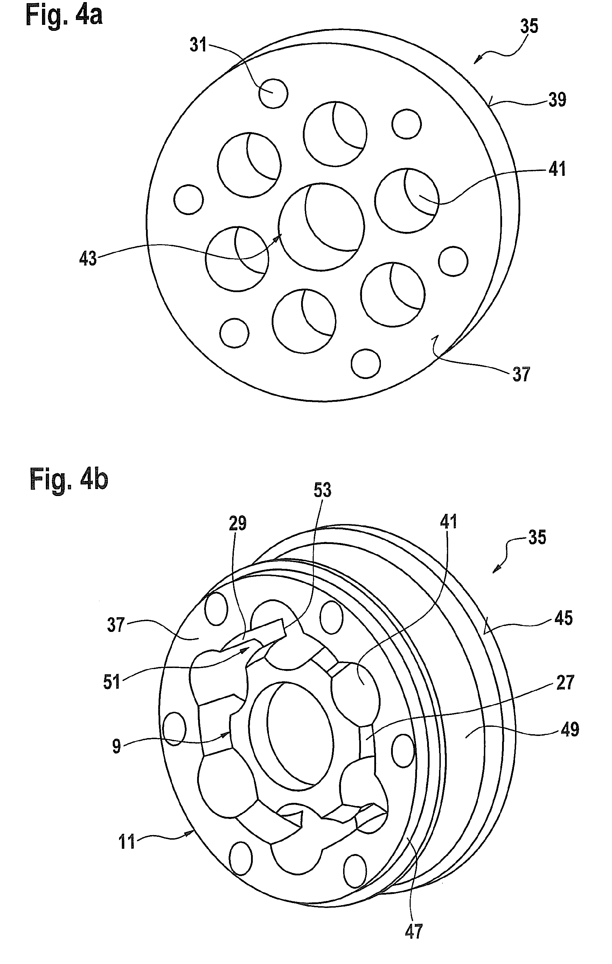

Im Folgenden wird anhand der Figuren 4a bis 4d auf das Verfahren zur Herstellung eines Innenteilrohlings 9 und eines Außenteilrohlings 11 eines Gelenks einer Gelenkwelle der hier angesprochenen Art näher eingegangen. Gleiche und gleichwirkende Teile sind mit Bezugsziffern versehen, wie sie oben anhand der Figuren 1 bis 3 verwendet wurden. Insofern wird auf deren Beschreibung verwiesen. Nach Fertigbearbeitung des Innenteilrohlings 9 und des Außenteilrohlings 11 liegt das anhand der Beschreibung der Figuren 1 bis 3 erwähnte Inntenteil 9 beziehungsweise Außenteil 11 vor.

Figur 4a zeigt einen Ausgangskörper 35 mit einer Vorderseite 37 sowie einer Rückseite 39. Da der Ausgangskörper 35 perspektivisch wiedergegeben ist, ist die Rückseite in dieser Darstellung nicht unmittelbar zu sehen.

Der Ausgangskörper 35 ist hier mit mindestens einer Bohrung 31 zur Aufnahme eines hier nicht dargestellten Befestigungsmittels versehen, deren Mittelachse senkrecht auf der Vorderseite 37 steht. Sie durchdringt den Ausgangskörper 35 vollständig. Bei dem hier dargestellten bevorzugten Ausführungsbeispiel ist der Ausgangskörper 35 mit sechs auf einer gedachten Kreisbahn angeordneten Bohrungen 31 versehen, die in gleichem Kreisbogenabstand zueinander angeordnet sind. Derartige Bohrungen 31 können entfallen, wenn eine Welle beispielsweise mit der Umfangsfläche des Ausgangskörpers 35 gekoppelt wird.

Der Ausgangskörper 35 ist außerdem mit mindestens einer Durchgangsbohrung 41 versehen, deren Mittelachse hier vorzugsweise senkrecht auf der Vorderseite 37 des Ausgangskörpers 35 steht. Bei dem hier bevorzugten Ausführungsbeispiel des Ausgangskörpers 35 sind sechs auf einer gedachten Kreisbahn in gleichem Abstand zueinander angeordnete Durchgangsbohrungen 41 zu sehen, die Teile der Kugelbahnoberfläche bilden, von denen oben die Kugelbahnabschnitte 17 und 19 erwähnt wurden.

Der Ausgangskörper 35 zeigt eine zentrale Öffnung 43. Sie kann, wie die mindestens eine Bohrung 31 und die mindestens eine Durchgangsbohrung 41, durch einen Bohrvorgang bei einem scheibenförmigen Ausgangskörper 35 erzeugt werden. Denkbar ist es aber auch, als Ausgangskörper 35 ein ringförmiges Element zu verwenden, das bei Einbringung der mindestens einen Bohrung 31 und/oder Durchgangsbohrung 41 bereits eine Öffnung 43 aufweist.

Für das Verfahren zur Herstellung eines Gelenks einer Gelenkwelle ist es belanglos, in welcher Reihenfolge die Bohrungen 31, die Durchgangsbohrungen 41 und gegebenenfalls die Bohrung zur Realisierung der Öffnung 43 in den Ausgangskörper 35 eingebracht werden. Mit dem Begriff "Bohrung" beziehungsweise "Durchgangsbohrung" werden oben, wie auch in der gesamten folgenden Beschreibung, wie bei der Öffnung 43, allgemein Ausnehmungen und Durchgänge im Ausgangskörper 35 angesprochen, die durch Bohren, Fräsen aber auch mit Hilfe nicht spanender Verfahren, beispielsweise mittels Laser- oder Erosionstechnik, in den Ausgangskörper 35 eingebracht werden können.

Figur 4b zeigt den Ausgangskörper 35 gemäß Figur 4a in einem weiter fortgeschrittenen Fertigungszustand. Es ist hier beispielhaft die Umfangsfläche 45 des scheiben- beziehungsweise ringförmigen Ausgangskörpers 35 bearbeitet worden. Dabei können mindestens eine randoffene Nut 47 und/oder eine seitlich geschlossene Nut 49 in die Umfangsfläche 45 eingebracht worden sein. Für das Herstellungsverfahren wesentlich ist, dass in die Vorderseite 37 des Ausgangskörpers 35 mindestens eine Nut 51 eingebracht ist, welche die mindestens eine Durchgangsbohrung 41 schneidet. Bei dem hier dargestellten bevorzugten Ausführungsbeispiel sind sechs Durchgangsbohrungen 41 auf einer gedachten Kreisbahn vorgesehen. Die Nut 51 ist hier ebenfalls kreisförmig ausgebildet. Durch die Seitenflächen der Nut 51 werden erste Bereiche der Außenfläche 27 des oben erwähnten Innenteilrohlings 9 und erste Bereiche der Innenfläche 29 des späteren Außenteilrohlings 11 geschaffen. Vorzugsweise wird die Kontur der Nut 51 so gewählt, dass die entstehenden Bereiche der Außenfläche 27 und der Innenfläche 29 der späteren Kontur des Gelenks 1 möglichst weitgehend entsprechen.

Die Tiefe der Nut 51 wird bei der hier beschriebenen Ausführungsform des Verfahrens zur Herstellung eines Gelenks 1 einer Gelenkwelle G so gewählt, dass ihr Boden 53 in einem Abstand zu einer parallel zur Vorderseite 37 verlaufenden gedachten Ebene, vorzugsweise Mittelebene des Ausgangskörpers 35 endet. Dabei ist die gedachte Mittelebene in gleichem Abstand zur Vorderseite 37 und zur Rückseite 39 angeordnet.

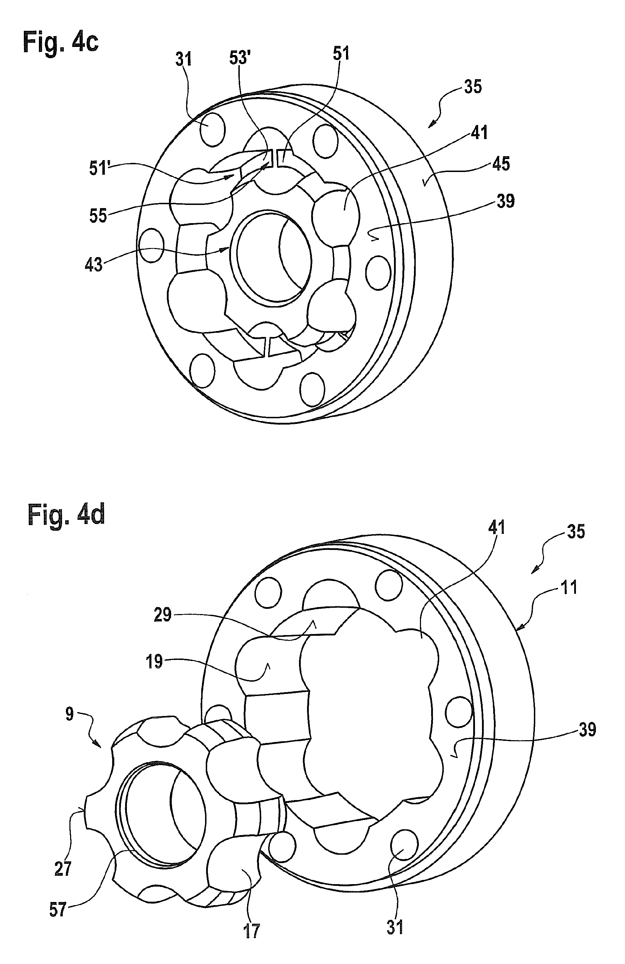

Figur 4c zeigt den Ausgangskörper 35 in perspektivischer Darstellung, wobei hier die Rückseite 39 des Ausgangskörpers 35 zu erkennen ist, außerdem die mindestens eine Bohrung 31, die mindestens eine Durchgangsbohrung 41 sowie die Öffnung 43.

In die Rückseite 39 ist mindestens eine Nut 51' eingebracht, für die das zur Nut 51 Gesagte entsprechend gilt. Die Tiefe der Nut 51' ist so gewählt, dass ihr Boden 53' in einem Abstand zur gedachten Ebene, vorzugsweise Mittelebene, des Ausgangskörpers 35 angeordnet ist. Auf diese Weise verbleibt zwischen den Nuten 51 und 51' ein Steg 55, welcher nach dem Einbringen der Nut 51' in den Ausgangskörper 35 den späteren Innenteilrohling 9 und den spätere Außenteilrohling 11 miteinander verbindet.

Sehr wohl ist es auch möglich, die Tiefe der Nuten 51 und 51' so zu wählen, dass der Innenteilrohling 9 und der Außenteilrohling 11 nach dem Einbringen der Nut 51' nicht mehr miteinander verbunden sind. In diesem Fall muss der spätere Innenteilrohling 9 von einer geeigneten Halterung, beispielsweise einem Dorn, während des Verfahrens zur Herstellung einer Gelenkwelle gehalten werden, sodass nach dem Einbringen der Nut 51' der Innenteilrohling 9 definiert aus dem Außenteilrohling 11 herausgenommen werden kann. Entsprechendes gilt natürlich während des Durchtrennens und Entfernens des Steges 55: Während dieses Verfahrensschritts muss der Innenteilrohling 9 entsprechend gehalten werden, damit es definiert aus dem Außenteilrohling 11 nach Durchtrennen des Stegs 5 entfernt werden kann.

Es zeigt sich ohne Weiteres, dass die Anzahl der Stege 55 von der Anzahl der Durchgangsbohrungen abhängt, deren Innenfläche später die Kugelbahnabschnitte 17 und 19 bilden werden.

Es ist schließlich noch möglich, die Nut nur von einer Seite aus in den Ausgangskörper einzubringen. Für das Einbringen der Nut sind sowohl spanende als auch nicht-spanende Verfahren einsetzbar.

Figur 4d zeigt schließlich den von dem Außenteilrohling 11 getrennten Innenteilrohling 9 des Ausgangskörpers 35. Gleiche Teile sind mit gleichen Bezugsziffern versehen, sodass insofern auf die vorangegangene Beschreibung verwiesen wird. Das Innen- und das Außenteilrohling müssen noch weiterbearbeitet werden. Es liegen hier also die Rohteile von Innen- und Außenteil vor.

Der in Figur 4d dargestellte Verfahrensschritt zeigt besonders deutlich, dass die Oberfläche der mindestens einen Durchgangsbohrung 41 nach der Trennung des Innenteilrohlings 9 von dem Außenteilrohlings 11 Bereiche der Kugelbahnoberfläche bildet. Durch die Oberfläche der Durchgangsbohrung 41 werden der Kugelbahnabschnitt 17 des Innenteils 9 und auch der Kugelbahnabschnitt 19 des Außenteilrohlings 11 realisiert.

Vorzugsweise wird das Verfahren zur Herstellung der Gelenkwelle 1 so durchgeführt, dass vor der endgültigen Trennung von Innenteilrohling 9 und Außenteilrohling 11 des Ausgangskörpers 35 alle Bohrungen 31 und Durchgangsbohrungen 41 realisiert sind, bei einem scheibenförmigen Ausgangskörper 35 auch die Öffnung 43, die gegebenenfalls mit einer Fase 57 oder anderen Konturen, beispielsweise einen Absatz oder dergleichen versehen sein kann.

Aus den Figuren 4a bis 4d wird deutlich, dass bei der Realisierung des Verfahrens zur Herstellung eines Gelenks 1 einer Gelenkwelle G die mindestens eine Bohrung 31 und/oder die mindestens eine Durchgangsbohrung 41 in einem einzigen Verfahrensschritt, beispielsweise ausgehend von der Vorderseite 37, in den Ausgangskörper 35 eingebracht werden können/kann. Teil der erfindungsgemäßen Lösung ist es aber auch, derartige Bohrungen, wie die Nut 51, 51' in zwei Herstellungsschritten zu realisieren und eine Teilbohrung, nämlich eine Sacklochbohrung, erst von einer Seite in den Ausgangskörper 35 einzubringen, und dann von der anderen Seite konzentrisch zur ersten Teilbohrung eine weitere Bohrung in den Ausgangskörper 35 einzubringen. Dies ist aber aufwändiger, sodass vorzugsweise in einem einzigen Verfahrensschritt eine durchgehende Bohrung 31 beziehungsweise Durchgangsbohrung 41 realisiert wird, gegebenenfalls auch die Öffnung 43.

Nach der Trennung des Innenteilrohlings 9 von dem Außenteilrohling 11 werden die beiden Teile vorzugsweise wärmebehandelt. Dann-gegebenenfalls eben auch ohne die Wärmebehandlung - werden die Funktionsoberflächen des Innenteilrohlings 9 und des Außenteilrohlings 11 hart bearbeitet. Es werden also die Außenfläche 27 des Innenteilrohlings 9 und die Innenfläche 29 des Außenteilrohlings 11 hartbearbeitet sowie der Kugelbahnabschnitt 17 des Innenteilrohlings 9 und der Kugelbahnabschnitt 19 des Außenteilrohlings 11.

Aus der Erläuterung des Verfahrens wird deutlich, dass die Wärmebehandlung vorzugsweise erst nach der des Ausgangskörpers 35 Bearbeitung durchgeführt wird. Es ist im Übrigen vorzugsweise möglich, die Vorderseite 37, die Rückseite 39 und/oder die Umfangsfläche 45 mittels Drehbearbeitung herzustellen. Auch die mindestens eine Bohrung 31 und die mindestens eine Durchgangsbohrung 41 werden vor der Wärmebehandlung in den Ausgangskörper 35 eingebracht. Sollte dieser nicht ringförmig ausgebildet sein und nicht von Anfang an die Öffnung 43 aufweisen, sollte dies vorzugsweise vor der Wärmebehandlung in den scheibenförmigen Ausgangskörper 35 eingebracht werden.

Schließlich sollte auch die Verzahnung 25 im Innenteil 9, die anhand von Figur 2 erläutert wurde, vor der Wärmebehandlung des Innenteils 9 realisiert werden.

Insgesamt zeigt sich, dass es auf einfache Weise und daher auch unter Erreichung hoher Stückzahlen möglich ist, ein Gelenk 1 mit Innenteil 9' und Außenteil 11' zu realisieren, weil die Rohlinge beider Teile aus einem scheibenförmigen oder ringförmigen Ausgangskörper 35 herstellbar sind, ohne dass dieser mehrfach eingespannt zu werden braucht. Der Innenteilrohling 9 und der Außenteilrohling 11 liegen erst unmittelbar vor der Fertigstellung getrennt vor, sodass sie bei der Bearbeitung nicht separat gehandhabt werden müssen. Dies ist erst bei der endgültigen Bearbeitung der Funktionsflächen des Innenteils beziehungsweise des Außenteils erforderlich, vorzugsweise nachdem eine Wärmebehandlung der beiden Teile durchgeführt wurde.

Ein Gelenk 1 der hier angesprochenen Art, das aus einem scheibenbeziehungsweise ringförmigen Ausgangskörper 35 hervorgegangen ist, ist also besonders einfach und kostengünstig realisierbar.

Aus den Erläuterungen zu den Figuren 1 bis 3 wird deutlich, dass hier die fertig bearbeiteten Innenteile 9' und Außenteile 11' des Gelenks 1 einer Gelenkwelle G angesprochen werden. Dem gegenüber entstehen bei der Bearbeitung eines scheiben- oder rohrförmigen Ausgangskörpers 35 nach den Figuren 4a bis 4d jeweils die Rohlinge des Innenteils beziehungsweise Außenteils, die dann einer Fertigbearbeitung unterzogen werden, insbesondere um die Kugelbahnoberflächen, beziehungsweise die Kugelbahnabschnitte 17 und 19 fertig zu bearbeiten.

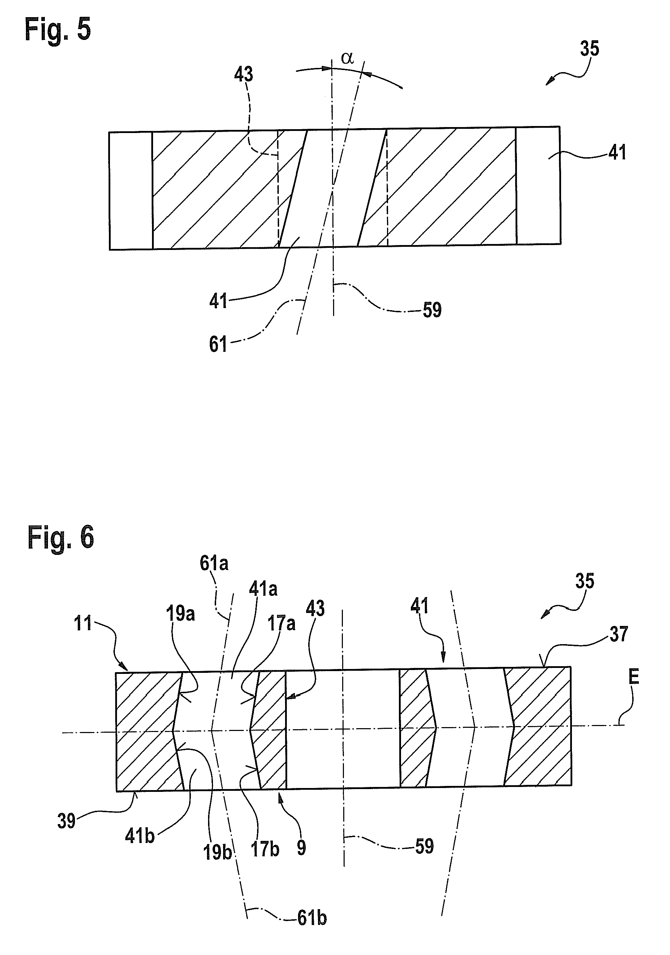

Figur 5 zeigt ein erstes Ausführungsbeispiel des Ausgangskörpers 35 mit mindestens einer Durchgangsbohrung 41. Die Schnittebene durch den Ausgangskörper 35 ist so gelegt, dass sie in einem Abstand zur Mittelachse 59 des Ausgangskörpers liegt, dabei wird die dem Betrachter zugewandte Durchgangsbohrung 41 mittig getroffen. Es zeigt sich, dass die Mittelachse 61 der Durchgangsbohrung 41 gegenüber der Mittelachse 59 des Ausgangskörpers 39 unter einem Winkel α verkippt ist. Sie vorzugsweise dabei so angeordnet, dass sie die Mittelachse 59 nicht schneidet, sondern quasi tangential zu einer die Mittelachse 59 umgebenden Zylinderfläche angeordnet ist.

Bei dieser Darstellung ist die Öffnung 43 gestrichelt dargestellt, weil sie außerhalb der Schnittebene liegt.

Figur 6 zeigt ein abgewandeltes Ausführungsbeispiel des Ausgangskörpers 35. Auch hier sind gleiche und funktionsgleiche Teile mit gleichen Bezugsziffern versehen, sodass insofern auf die Beschreibung zu den vorangegangenen Figuren verwiesen werden kann.

Bei dem hier wiedergegebenen Ausführungsbeispiel sind vorzugsweise sechs als Durchgangsbohrungen 41 realisierte Durchbrechungen vorgesehen, die jeweils aus zwei Bohrungsabschnitten 41 a und 41 b bestehen. Die Bohrungsabschnitte 41 a und 41 b weisen je eine Mittelachse 61 a und 61 b auf. Die Darstellung gemäß Figur 6 zeigt, dass sich die Mittelachsen 61 a und 61 b schneiden und zwar vorzugsweise im Bereich der Mittelebene E des Ausgangskörpers 35, die im gleichen Abstand zur Vorderseite 37 und zur Rückseite 39 des Ausgangskörpers 35 angeordnet ist und parallel zu diesen verläuft. Der Schnittpunkt der Mittelachsen 61 a und 61 b kann aber auch in einer anderen gedachten Ebene als der Mittelebene liegen, wenn dies für einen bestimmten Verlauf der Kugelbahnabschnitte erforderlich ist.

Der erste Bohrungsabschnitt 41 a wird also von der Vorderseite 37 aus in den Ausgangskörper 35 eingebracht und der zweite Bohrungsabschnitt 41 b der Durchgangsbohrung 41 von der Rückseite 39 aus. Dabei ist es selbstverständlich belanglos, ob zunächst der Bohrungsabschnitt 41 a und dann der Bohrungsabschnitt 41 b in den Ausgangskörper 35 eingebracht wird oder umgekehrt.

Derartig abgewinkelte Durchgangsbohrungen 41 können sowohl in einen scheibenförmigen als auch in einen ringförmigen Ausgangskörper 35 eingebracht werden.

Durch die abgewinkelten Bohrungsabschnitte 41 a und 41 b werden auf der späteren Außenfläche 27 des Innenteils 9 Kugelbahnabschnitte 17a und 17b ausgebildet. Entsprechend wird auf der Innenfläche des Außenteils 11 einer erster Kugelbahnabschnitt 19a ausgebildet, der sich in einen zweiten Kugelbahnabschnitt 19b fortsetzt.

Vorzugsweise liegen die Mittelachsen 61 a und 61 b in einer Schnittebene, die hier in Figur 6 dargestellt ist und mit einer Durchmesserlinie zusammenfällt. Die Mittelachsen 61 a und 61 b schneiden außerhalb der Darstellung in Figur 6 die Mittelachse 59 des Ausgangskörpers 35.

Es kann vorzugsweise auch vorgesehen werden, dass die Mittelachsen 61 a und 61 b der Teilabschnitte 41 a und 41 b der Durchgangsbohrung 41 entsprechend den Ausführung zu Figur 5 zusätzlich verkippt sind, also nicht in der Bildebene von Figur 6 liegen.

Der Darstellung von Figur 6 ist zu entnehmen, dass die Mittelachsen 61 a und 61 b der Bohrungsabschnitte 41 a und 41 b symmetrisch zur Mittelebene E verlaufen.

Die Durchbrechungen, beispielsweise die abgewinkelten Durchgangsbohrungen 41, können auch nur von einer Seite des Ausgangskörpers aus in diesen eingebracht werden. Es können dabei spanende und nicht-spanende Verfahren eingesetzt werden.

Erfindungsgemäß ist auch ein Verfahren zur Herstellung eines Außenteilrohlings und eines Innenteilrohlings eines Gelenks einer Gelenkwelle einsetzbar, bei dem anstelle eines scheiben- oder ringförmigen Ausgangskörpers ein stangenförmiges Ausgangsmaterial verwendet wird. In dessen Stirnseite wird mindestens eine Ausnehmung eingebracht, um eine Kugelbahnoberfläche vorzubereiten. Wie oben zu den anderen Verfahren bereits ausgeführt, kann diese Ausnehmung durch spanende Bearbeitung und durch nicht-spanende Bearbeitung hergestellt werden. Sie verläuft senkrecht oder unter einem Winkel zur Stirnseite des Ausgangsmaterials und kann einen geradlinigen oder gekrümmten Verlauf aufweisen. Unter einem gekrümmten Verlauf soll auch verstanden werden, dass die Ausnehmung zwei ineinander übergehende, abknickende, geradlinige Ausnehmungsbereiche aufweist.

Von dem stangenförmigen Ausgangsmaterial wird zur Erzeugung eines Ausgangskörpers, wie er auch bei den oben genannten Verfahren angesprochen wurde, eine Scheibe abgetrennt. Vorher oder danach kann eine -vorzugsweise kreisförmige- Nut in die der Stirnseite des Ausgangsmaterials entsprechende Vorderseite der Scheibe und/oder in die der Stirnseite gegenüberliegende Rückseite der Scheibe eingebracht werden, welche die mindestens eine Ausnehmung zur Vorbereitung der Kugelbahnoberfläche schneidet, um einen Außenteilrohling und einen Innenteilrohling herzustellen. Dabei ist es möglich, dass die Nut so tief ist, dass beim Abschneiden der Scheibe bereits der Innenteilrohling von dem Außenteilrohling getrennt wird. In diesem Fall muss der Innenteilrohling während des Abtrennens der Scheibe gehalten werden, damit eine definierte Weiterverarbeitung sowohl des Innenteilrohlings als auch des Außenteilrohlings möglich ist. Letzterer wird bereits dadurch definiert gehalten, dass der vordere Bereich des Ausgangsmaterials gehalten wird, während eine Scheibe abgetrennt wird.

Sollte der Außenteilrohling, wie oben beschrieben, Bohrungen (siehe Bezugsziffer 31 in den oben beschriebenen Figuren) aufweisen, die der Aufnahme von Befestigungsmitteln dienen, so können diese Bohrungen vor dem Abtrennen einer Scheibe auch schon in die Stirnseite des Ausgangsmaterials eingebracht werden, weil dann der spätere Außenteilrohling in einer definierten Position gegenüber dem späteren Innenteilrohling angeordnet ist.

Das Ausgangsmaterial kann rohrförmig ausgebildet sein und eine zentrale Ausnehmung aufweisen. Wird von einem derartigen stangenförmigen Ausgangsmaterial eine Scheibe abgetrennt, so liegt bereits die in Zusammenhang mit den anderen Verfahren erwähnte zentrale Durchbrechung 41 vor.

Vorzugsweise ist das Ausgangsmaterial - im Querschnitt gesehen-kreisförmig ausgebildet beziehungsweise zylindrisch, sodass es einer Außenbearbeitung der abgetrennten Scheibe nicht bedarf. Falls jedoch, wie oben auch erläutert, in die Umfangsfläche eines Ausgangskörpers mindestens eine Nut oder aber auch Löcher zur Befestigung einer Welle eingebracht werden, so können die Nuten beziehungsweise die Löcher in das stangenförmige Ausgangsmaterial eingebracht werden, bevor eine Scheibe abgetrennt wird. Dies vereinfacht die spätere Weiterbearbeitung des Ausgangskörpers.

Nach allem wird deutlich, dass bei Verwendung von stangenförmigem Ausgangsmaterial und bei Einbringung erster Konturen in die Umfangsfläche des stangenförmigen Ausgangsmaterials oder in dessen Stirnseite einige Bearbeitungsschritte bereits vorweggenommen sein können, die in Zusammenhang mit den oben beschriebenen Verfahren erforderlich sind. Die Verwendung von stangenförmigem Ausgangsmaterial kann die Herstellung von Außenteil- und Innenteilrohlingen also noch weiter vereinfachen, sodass Bearbeitungszeit und Kosten eingespart werden können.

## Patentansprüche

1. Verfahren zur Herstellung eines Außenteilrohlings (11) und eines Innenteilrohlings (9) eines Gelenks (1) einer Gelenkwelle (G) aus einem ringförmigen Ausgangskörper (35), der eine Vorderseite (37) und eine Rückseite (39) aufweist, mit folgenden Schritten:
- Einbringen mindestens einer Durchgangsbohrung (41) in die Vorder- (37) oder Rückseite (39) des Ausgangskörpers (35) zur Vorbereitung einer Kugelbahnoberfläche,
- wobei die mindestens eine Durchgangsbohrung (41) senkrecht oder unter einem Winkel zur Vorder- (37) oder Rückseite (39) des Ausgangskörpers (35) verläuft, vorzugsweise ohne eine Mittelachse (59) des Ausgangskörpers (35) zu schneiden,
- Einbringen einer -vorzugsweise kreisförmigen- Nut (51) in die Vorderseite (37) des Ausgangskörpers (35), welche die mindestens eine Durchgangsbohrung (41) zur Vorbereitung der Kugelbahnoberfläche schneidet, und dass vorzugsweise in die Rückseite (39) des Ausgangskörpers (35) eine Nut (51') eingebracht wird, welche die mindestens eine Durchgangsbohrung (41') zur Vorbereitung der Kugelbahnoberfläche schneidet, um den Innenteilrohling (9) von dem Außenteilrohling (11) abzugrenzen, und
- vorzugsweise Einbringen mindestens einer Bohrung (31) in den Ausgangskörper (35) für Befestigungsmittel (13).

2. Verfahren zur Herstellung eines Außenteilrohlings (11) und eines Innenteilrohlings (9) eines Gelenks (1) einer Gelenkwelle (G) aus einem im wesentlichen scheibenförmigen Ausgangskörper (35), der eine Vorderseite (37) und eine Rückseite (39) sowie eine Umfangsfläche (45) aufweist, mit folgenden Schritten:
- Einbringen einer zentralen Bohrung in den Ausgangskörper (35) für Eingriff eines Wellenendes (5),
- Einbringen mindestens einer Durchgangsbohrung (41) in die Vorder- (37) oder Rückseite (39) des Ausgangskörpers (35) zur Vorbereitung einer Kugelbahnoferfläche,
- wobei die mindestens eine Durchgangsbohrung (41) senkrecht oder unter einem Winkel zur Vorder- (37) oder Rückseite (39) des Ausgangskörpers (35) verläuft, vorzugsweise ohne eine Mittelachse (59) des Ausgangskörpers (35) zu schneiden,
- Einbringen einer -vorzugsweise kreisförmigen- Nut (51) in die Vorderseite (37) des Ausgangskörpers (35), welche die mindestens eine Durchgangsbohrung (41) zur Vorbereitung der Kugelbahnoberfläche schneidet, und dass in die Rückseite (39) des Ausgangskörpers (35) eine Nut (51') eingebracht wird, welche die mindestens eine Durchgangsbohrung (41) zur Vorbereitung der Kugelbahnoberfläche schneidet, um den Innenteilrohling (9) von dem Außenteilrohling (11) abzugrenzen, und
- vorzugsweise Einbringen mindestens einer Bohrung (31) in den Ausgangskörper (35) für Befestigungsmittel (13).

3. Verfahren zur Herstellung eines Außenteilrohlings (11) und eines Innenteilrohlings (9) eines Gelenks (1) einer Gelenkwelle (G) aus einem ringförmigen Ausgangskörper (35), der eine Vorderseite (37) und eine Rückseite (39) umfasst, mit folgenden Schritten:
- Einbringen mindestens je einer Teilbohrung (41 a, 41 b) einer Durchgangsbohrung (41) in die Vorder- (37) oder Rückseite (39) des Ausgangskörpers (35) zur Vorbereitung einer Kugelbahnoberfläche, wobei
- sich die Mittelachsen (61 a, 61 b) der Teilbohrungen (41 a, 41 b) unter einem Winkel α ≥ 0° - vorzugsweise in einer Mittelebene (E) des Ausgangskörpers (35) - schneiden,
- Einbringen einer -vorzugsweise kreisförmigen- Nut (51) in die Vorderseite (37) des Ausgangskörpers (35), welche die mindestens eine Teilbohrung (41 a) zur Vorbereitung der Kugelbahnoberfläche schneidet, und dass in die Rückseite (39) des Ausgangskörpers (35) eine Nut (51') eingebracht wird, welche die mindestens eine Teilbohrung (41 b) zur Vorbereitung der Kugelbahnoberfläche schneidet, um den Innenteilrohling (9) von dem Außenteilrohling (11) abzugrenzen, und
- vorzugsweise Einbringen mindestens einer Bohrung (31) in den Ausgangskörper (35) für Befestigungsmittel (13).

4. Verfahren zur Herstellung eines Außenteilrohlings (11) und eines Innenteilrohlings (9) eines Gelenks (1) einer Gelenkwelle (G) aus einem im Wesentlichen scheibenförmigen Ausgangskörper (35), der eine Vorderseite (37) und eine Rückseite (39) sowie eine Umfangsfläche (45) aufweist, mit folgenden Schritten:
- Einbringen einer zentralen Bohrung in den Ausgangskörper (35) für dem Eingriff eines Wellenendes (5),
- Einbringen mindestens je einer Teilbohrung (41 a, 41 b) in die Vorder- (37) und Rückseite (39) des Ausgangskörpers (35) zur Vorbereitung einer Kugelbahnoberfläche, wobei
- sich die Mittelachsen (61 a, 61 b) der Teilbohrungen (41 a, 41 b) unter einem Winkel von α ≥ 0° - vorzugsweise in einer Mittelebene (E) des Ausgangskörpers (35) - schneiden,
- Einbringen einer -vorzugsweise kreisförmigen- Nut (51) in die Vorderseite (37) des Ausgangskörpers (35), welche die mindestens eine Teilbohrung (41 a) zur Vorbereitung der Kugelbahnoberfläche schneidet, und dass in die Rückseite (39) des Ausgangskörpers (35) eine Nut (51') eingebracht wird, welche die mindestens eine Teilbohrung (41 b) zur Vorbereitung der Kugelbahnoberfläche schneidet, um den Innenteilrohling (9) von dem Außenteilrohling (11) abzugrenzen, und
- vorzugsweise Einbringen mindestens einer Bohrung (31) in den Ausgangskörper (35) für Befestigungsmittel (13).

5. Verfahren zur Herstellung eines Außenteilrohlings (11) und eines Innenteilrohlings (9) eines Gelenks (1) einer Gelenkwelle (G) aus stangenförmigem Ausgangsmaterial, das eine Stirnseite aufweist, mit folgenden Schritten:
- Einbringen mindestens einer Ausnehmung in die Stirnseite des Ausgangsmaterials zur Vorbereitung einer Kugelbahnoberfläche,
- wobei die Ausnehmung senkrecht oder unter einem Winkel zur Stirnseite und geradlinig oder gekrümmt verläuft,
- Einbringen einer -vorzugsweise kreisförmigen- Nut in die Stirnseite des Ausgangsmaterials, welche die mindestens eine Ausnehmung zur Vorbereitung der Kugelbahnoberfläche schneidet, um einen Außenteilrohling (11) von einem Innenteilrohling (9) abtrennen zu können,
- Abtrennen einer Scheibe von dem stangenförmigen Ausgangsmaterial zur Erzeugung eines Ausgangskörpers, aus dem ein Außenteilrohling (11) und ein Innenteilrohling (9) fertigbar sind,
- wobei die Nut auch nach Abtrennen der Scheibe in den Ausgangskörper einbringbar ist und dabei sowohl in die der Stirnseite entsprechende Vorderseite des Ausgangskörpers und/oder in dessen der Vorderseite gegenüberliegende Rückseite einbringbar ist.

6. Verfahren nach Anspruch 5, **dadurch gekennzeichnet, dass** die in Richtung der Längserstreckung des Ausgangsmaterials gemessene Tiefe der Ausnehmung größer ist als die Dicke der abgetrennten Scheibe, sodass vorzugsweise mindestens zwei Scheiben von dem Ausgangsmaterial abtrennbar sind, die von der Ausnehmung durchdrungen werden, wobei in diesem Fall die die mindestens eine Ausnehmung schneidende Nut vorzugsweise so tief gewählt wird, dass sie eine abgetrennte Scheibe nur dann vollständig durchdringt, wenn der mittlere Bereich der Scheibe, der dem späteren Innenteilrohling entspricht, vor Einbringen der Nut auf geeignete Weise gehalten wird.

7. Verfahren nach Anspruch 5 oder 6, **dadurch gekennzeichnet, dass** das Ausgangsmaterial rohrförmig ausgebildet ist und damit zumindest in einer abgetrennten Scheibe eine zentrale Durchbrechung vorliegt.

8. Verfahren nach einem der Ansprüche 5 bis 7, **dadurch gekennzeichnet, dass** das Ausgangsmaterial - im Querschnitt gesehen - kreisförmig ausgebildet ist.

9. Verfahren nach einem der Ansprüche 1 bis 8, **dadurch gekennzeichnet, dass** zwischen den von der Vorderseite (37) und von der Rückseite (39) eingebrachten Nuten (51, 51') ein Steg (55) bestehen bleibt.

10. Verfahren nach einem der Ansprüche 1 bis 8, **dadurch gekennzeichnet, dass** die Kontur der Nuten (51, 51') an die Außenkontur (27) des Innenteilrohlings (9) und an die Innenkontur (29) des Außenteilrohlings (11) angepasst ist.

11. Verfahren nach einem der vorhergehenden Ansprüche, **dadurch gekennzeichnet, dass** der innere Bereich, also der spätere Innenteilrohling (9) des Ausgangskörpers (35) gehalten wird, während die Nuten (51, 51') in die Vorderseite (37) und in die Rückseite (39) des Ausgangskörpers (35) eingebracht werden, insbesondere aber während der Steg (55) gemäß Anspruch 6 durchtrennt oder entfernt wird.

12. Verfahren nach einem der vorhergehenden Ansprüche, **dadurch gekennzeichnet, dass** die Funktionsflächen des Innenteilrohlings (9) und die des Außenteilrohlings (11) hartbearbeitet werden, vorzugsweise nachdem der Innenteilrohling (9) und/oder der Außenteilrohling (11) wärmebehandelt wurden.

13. Verfahren nach einem der vorhergehenden Ansprüche, **dadurch gekennzeichnet, dass** die zentrale Bohrung des Ausgangskörpers (35) mit Nuten und Zähnen versehen wird.

14. Gelenk mit einem Innenteil und einem Außenteil, **dadurch gekennzeichnet, dass** diese Teile nach einem Verfahren gemäß den Ansprüchen 1 bis 13, hergestellten Rohlingen bestehen.
